# EUROPÄISCHE PATENTANMELDUNG

(11) **EP 1 669 681 A2**
(43) Veröffentlichungstag der Anmeldung: **14.06.2006**
(21) Anmeldenummer: 05025128.9
(22) Anmeldetag: 17.11.2005
(51) Int. Cl.: F24D 3/14

(54) **Vorgefertigtes Temperierungsmodul für die Verwendung in einem Bauelement, insbesondere einem Decken- oder Wandelement, und zugehöriges Verfahren zur Herstellung eines Bauelements**

(30) Priorität: 24.11.2004 DE 102004057452
(71) Anmelder: REHAU AG + Co, 95111 Rehau (DE)
(72) Erfinder: Kübler, Rainer, Ross-on-Wye Herefordshire HR9 5RD (GB)

(57) **Zusammenfassung**

Vorgefertigtes Temperierungsmodul (1) für die Verwendung in einem Bauelement, insbesondere einem Decken- oder Wandelement, mit wenigstens einer Rohrleitung (2), wobei das Temperierungsmodul (1) eine oder mehrere Halteschienen (3) aufweist, an denen die Rohrleitung (2) gehaltert ist.

## Beschreibung

Die Erfindung betrifft ein vorgefertigtes Temperierungsmodul für die Verwendung in einem Bauelement, insbesondere einem Decken- oder Wandelement, mit wenigstens einer Rohrleitung.

Sollen bei Gebäuden Decken und Wände mit Rohrleitungen, die der Raumtemperierung, also der Heizung oder Kühlung, dienen, versehen werden, so besteht einerseits die Möglichkeit, die Rohrleitungen direkt auf einer unteren Bewehrung zu verlegen. Diese manuelle Verlegung ist jedoch mit einem erheblichen Zeitaufwand verbunden und bringt das Problem mit sich, dass es schwierig ist, einen bestimmten Verlegeabstand zu sichern.

Alternativ besteht die Möglichkeit, vorgefertigt Temperierungsmodule zu verwenden, die gegenwärtig in der Regel eine Baustahlträgermatte umfassen, mit der sie vor Ort auf der unteren Bewehrung verlegt werden oder in Betonfertigteile integriert sind. Diese Baustahlträgermatte erfüllt lediglich die Funktion einer Rohrhalterung und hat keinen statischen Nutzen. Angesichts steigender Stahlpreise ist die Verwendung einer solchen Baustahlträgermatte als Mittel zum Zweck mit merklichen zusätzlichen Kosten verbunden.

Aus der Druckschrift DE 100 33 792 ist eine Rohrverlegeanordnung bekannt, die Rohrabschnitte aufweist, die zur Bildung einer selbsttragenden Anordnung an den Kreuzungspunkten miteinander verbunden sind. Diese selbsttragende Anordnung führt jedoch dazu, dass die Rohrlage auf zwei verschiedenen Höhen angeordnet ist. Zudem ist es erforderlich, als Rohrmaterial ein Metallverbundrohr einzusetzen, da nur damit die selbsttragende Rohrverlegeanordnung die erforderliche Aussteifung erhält. Daraus ergeben sich jedoch Probleme für den mit starken Beanspruchungen verbundenen Baustelleneinsatz, da Deformierungen des Rohrquerschnittes irreparabel sind und eine Erhöhung des Druckverlustes nach sich ziehen. Bei einem vollständigen Einknicken des Rohres ist es erforderlich, die schadhafte Stelle zu ersetzen, da ansonsten die Gefahr besteht, dass das Rohr nicht mehr durchströmt wird.

Der Erfindung liegt somit die Aufgabe zugrunde, ein diesbezüglich verbessertes Temperierungsmodul anzugeben.

Zur Lösung dieses Problems ist bei einem vorgefertigten Temperierungsmodul der eingangs genannten Art erfindungsgemäß vorgesehen, dass das Temperierungsmodul eine oder mehrere Halteschienen aufweist, an denen die Rohrleitung gehaltert ist.

Die Verwendung von Halteschienen zur Halterung der Rohrleitung beziehungsweise der Rohrleitungen dient in einfacher Weise zur Formgebung des Temperierungsmoduls, welches dann sowohl auf einer Baustelle vor Ort, als auch in der industriellen Fertigung von Betonvoll- und Betonhalbfertigteilen für Decken oder Wände verwendbar ist. Die Anzahl beziehungsweise Ausbildung der Halteschienen kann an die benötigten Rohrleitungen angepasst werden, so dass der Materialeinsatz im Vergleich mit der Verwendung einer Baustahlträgermatte vorteilhaft reduziert werden kann.

Besonders vorteilhaft ist es, wenn die Halteschiene aus Kunststoff besteht. In diesem Fall ist eine kostengünstige Produktion der Temperierungsmodule bei einer kurzen Fertigungszeit möglich. Das Eigengewicht des sich ergebenden Temperierungsmoduls ist geringer als bei der Verwendung von Baustahlträgermatten, so dass die Montagezeit bei der Verlegung vor Ort verkürzt wird.

Erfindungsgemäß kann die Rohrleitung kraftschlüssig an der Halteschiene gehaltert sein. Durch eine derartige kraftschlüssige Halterung wird der Verlegeabstand der Rohrleitung im Bezug auf die unterliegende Schiene gesichert. Beispielsweise kann eine Halterung mit Kabelbindern realisiert werden, wodurch ein Verrutschen der Rohrleitung gegenüber der Schiene verhindert wird.

Gemäß einer Ausgestaltung der Erfindung ist vorgesehen, dass die Halteschiene wenigstens eine nach oben geöffnete Clipvorrichtung aufweist, an der die Rohrleitung gehaltert ist. Diese Clipvorrichtung ermöglicht zum einen bei der Herstellung des Temperierungsmoduls eine schnelle und unkomplizierte Halterung der Rohrleitung an der Schiene, während sie zum anderen einen gesicherten Verlegeabstand gewährleistet. Die Verwendung dieses einfachen Clipmechanismus erlaubt es, die für die Fertigung des Temperierungsmoduls erforderliche Zeit weiter abzusenken.

Alternativ ist vorgesehen, dass die Halteschiene wenigstens eine die gehalterte Rohrleitung umschließende Clipvorrichtung aufweist. Ein solcher das Rohr umschließender Clip zur Halterung desselben kann dann sinnvoll sein, wenn das vorgefertigte Temperierungsmodul im Baustelleneinsatz besonders hohen Anforderungen ausgesetzt ist, wobei ein speziell angepasster umschließender Clip eine besonders sichere Halterung der Rohrleitung gewährleistet, so dass diese weder verrutscht noch, beispielsweise in Folge von Stößen, ausgeclipt wird. Demgegenüber kann eine Clipvorrichtung, die nach oben geöffnet ist, je nach Ausführung variabler für unterschiedliche Rohrdurchmesser verwendet werden, wodurch sich Vorteile hinsichtlich der Produktion der Temperierungsmodule ergeben können.

Weiterhin ist erfindungsgemäß vorgesehen, dass die Halteschiene bei gegebenenfalls vorhandenen Umlenkungen der Rohrleitung beabstandet zum Umlenkungsbereich angeordnet ist. Diese Beabstandung ist wenigstens so zu wählen, dass der minimale Biegeradius der Rohre ohne Rohrführungsbogen eingehalten wird. So können Beschädigungen der Rohrleitungen durch eine zu hohe Beanspruchung vermieden werden.
Vorteilhafterweise besteht die Rohrleitung aus Kunststoff, insbesondere aus vernetztem Polyethylen. Diese Materialwahl bietet sich insbesondere für den mit hohen Belastungen verbundenen Baustelleneinsatz an, um so Probleme, die bei der Verwendung eines Metallverbundrohres im Zusammenhang mit Deformierungen des Rohrquerschnittes auftreten können, zu vermeiden. Zudem kann durch die aus Kunststoff bestehende Rohrleitung das Eigengewicht des fertigen Temperierungsmoduls weiter herabgesetzt werden.
Darüber hinaus kann erfindungsgemäß vorgesehen sein, dass die Rohrleitung in dem Temperierungsmodul in einer Doppelmäanderform oder einer Schneckenmäanderform oder einer Einfachmäanderform angeordnet ist. Die Rohrverlegung in der Doppelmäanderbeziehungsweise Schneckenmäanderform bietet sich insbesondere dann an, wenn das Temperierungsmodul deckennah eingebracht werden soll.
Außerdem betrifft die Erfindung ein Verfahren zur Herstellung eines Bauelements, insbesondere eines Decken- oder Wandelements, unter Verwendung eines Temperierungsmoduls wie vorstehend beschrieben. Erfindungsgemäß umfasst das Verfahren die folgenden Schritte:
- Fertigung des Temperierungsmoduls,
- Erstellen einer statisch erforderlichen Bewehrung,
- Einbringen des Temperierungsmoduls und Halterung desselben an der Bewehrung und
- Einbringen konstruktiver Elemente zur Halterung einer oberen Bewehrung.

Dabei ist es besonders vorteilhaft, wenn das Temperierungsmodul eine Rohrleitung aus einem vernetzten Polyethylen mit einer Rohrverlegung in Doppelmäanderform aufweist.
Der Verlegeabstand kann durch eine kraftschlüssige Halterung der Rohrleitung, beispielsweise über Clipvorrichtungen, an einer Kunststoffschiene gewährleistet werden. Nach der Fertigung des Temperierungsmoduls kann dieses auf die Baustelle oder in das Betonwerk zur Weiterverarbeitung transportiert werden.

Demgemäß erfolgt das Erstellen der statisch notwendigen Bewehrung entweder auf der Baustelle oder in einem Betonwerk, wobei alternativ Stabstahl oder Bewehrungsmatten verwendet werden können. Anschließend wird das Temperierungsmodul entweder in ein Fertigteil eingebracht oder durch Verlegen auf der Baustelle in ein Bauelement eingebracht. Die Halterung des Temperierungsmoduls an der statisch erforderlichen Bewehrung dient dazu, ein Aufschwimmen beim Verguss mit Beton zu verhindern. Ein solches Fixieren kann z.B. kraftschlüssig über Kabelbinder oder Drähte erfolgen. Schließlich ist es erforderlich, zur Halterung einer oben Bewehrung konstruktive Elemente in das Bauelement einzubringen.

Nach dem Erstellen der statisch erforderlichen Bewehrung kann auf dieser wenigstens ein Abstandselement angeordnet werden, auf dem das Temperierungsmodul eingebracht wird. Das Abstandselement dient der flexiblen Höhenanpassung des Temperierungsmoduls. Das Temperierungsmodul kann gegebenenfalls an dem Abstandselement fixiert werden.

Außerdem kann das Verfahren ein Einbringen einer oberen Bewehrung und einen anschließenden Verguss des Bauelements mit Beton umfassen. Diese Verfahrensschritte dienen der Herstellung eines Bauelements mit einem Temperierungsmodul im Rahmen einer Erstellung einer Ortbetondecke auf einer Baustelle beziehungsweise in Betonvollfertigteilen.

Dabei können als konstruktive Elemente zum einen Abstandshalter verwendet werden, die die obere Bewehrung beispielsweise bei einer Ortbetondecke in einem definierten Abstand zur Schalung halten. Hierzu kann auf handelsübliche Abstandshalter zurückgegriffen werden.

Weiterhin können erfindungsgemäß als konstruktive Elemente Bügelbewehrungen entlang einer Außenkante des Bauelements verwendet werden. Derartige Bügelbewehrungen stabilisieren ein Betonvollfertigteil an seiner Außenseite.

Weiterhin betrifft die Erfindung ein Verfahren zur Herstellung eines Bauelements, welches nach dem Einbringen konstruktiver Elemente zur Halterung einer oberen Bewehrung einen teilweisen gesamtflächigen Verguss des Bauelements, ein Einbringen einer oberen Bewehrung und einen anschließenden Verguss des Bauelements mit Beton vorsieht.

Mit diesem Verfahren ist es möglich, Betonhalbfertigteile herzustellen und zu montieren, die Temperierungsmodule wie eingangs beschrieben aufweisen. Dabei erfolgt nach dem teilweisen Verguss des vorgefertigten Bauelements zunächst eine Aushärtung desselben, bevor dieses auf die Baustelle transportiert und dort montiert werden kann. Erst vor Ort auf der Baustelle erfolgt nach dem Einbringen der oberen Bewehrung der abschließende Verguss des gesamten Elements.

Hierbei können als konstruktive Elemente in das Bauelement integrierte Gitterträger verwendet werden, die zur Auflage der oberen Bewehrung dienen können.

Das erfindungsgemäße Temperierungsmodul kann somit vorteilhafterweise sowohl in einem Verfahren zur Herstellung eines Betonvollfertigteils beziehungsweise zur Fertigung einer Ortbetondecke als auch in einem Verfahren zur Herstellung eines Betonhalbfertigteils verwendet werden. Neben der breiten Anwendbarkeit ergeben sich Vorteile bei der Herstellung von Bauelementen für Decken beziehungsweise Wände durch die Verwendung von weniger beziehungsweise günstigeren Materialien, nämlich Kunststoff statt einer Stahlträgermatte, sowie durch eine Verringerung der Fertigungszeit und des Eigengewichts des Temperierungsmoduls mit einer daraus folgenden Verkürzung der Montagezeit vor Ort.

Weitere Vorteile, Merkmale und Einzelheiten der Erfindung ergeben sich aus den im Folgenden dargestellten Ausführungsbeispielen sowie anhand der Zeichnungen. Dabei zeigen:
- Fig. 1: ein vorgefertigtes Temperierungsmodul mit einer in Doppelmäanderform angeordneten Rohrleitung;
- Fig. 2: ein vorgefertigtes Temperierungsmodul mit einer in Einfachmäanderform angeordneten Rohrleitung;
- Fig. 3: ein Teilstück einer Halteschiene eines erfindungsgemäßen Temperierungsmoduls mit einer nach oben geöffneten Clipvorrichtung;
- Fig. 4: ein Teilstück einer Halteschiene eines erfindungsgemäßen Temperierungsmoduls mit einer umschließenden Clipvorrichtung;
- Fig. 5: einen Schnitt durch eine nach einem erfindungsgemäßen Verfahren hergestellte Ortbetondecke;
- Fig. 6: einen Schnitt durch ein nach einem erfindungsgemäßen Verfahren hergestelltes Betonvollfertigteil; und
- Fig. 7: einen Schnitt durch ein nach einem erfindungsgemäßen Verfahren hergestelltes Betonhalbfertigteil.

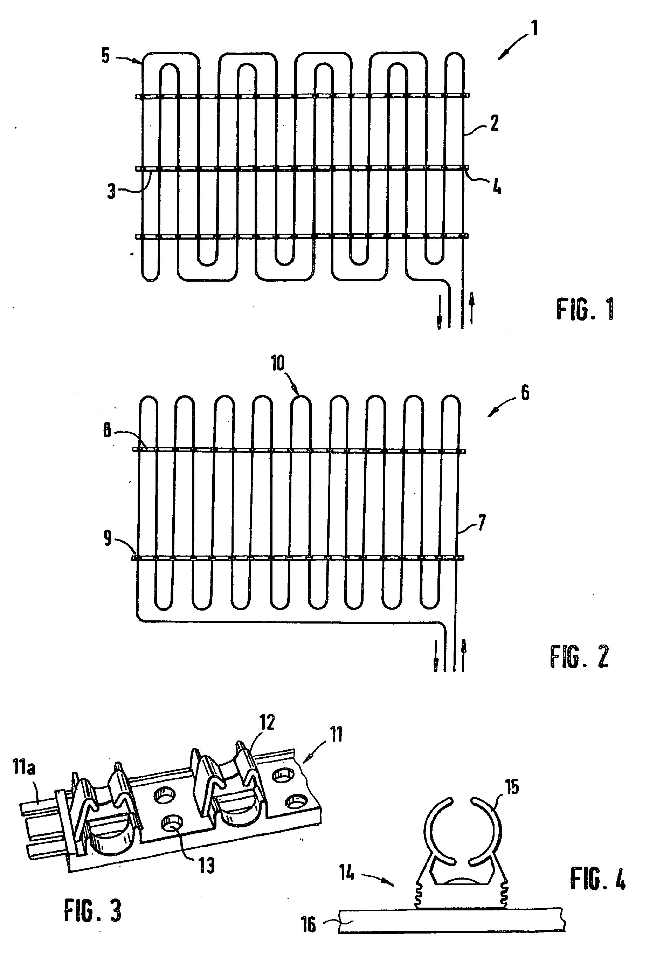

Fig. 1 zeigt ein erfindungsgemäßes vorgefertigtes Temperierungsmodul 1 mit einer in Doppelmäanderform angeordneten Rohrleitung 2. Die Pfeile geben dabei die Flussrichtung der die Rohrleitung 2 zur Temperierung durchfließenden Flüssigkeit an. Das Temperierungsmodul 1 umfasst weiterhin drei Halteschienen 3, die aus Kunststoff bestehen, ebenso wie die Rohrleitung 2. Die Halteschienen 3 verfügen über Clipvorrichtungen 4, an denen die Rohrleitung 2 clipgehaltert ist, so dass das Temperierungsmodul 1 eine feste Form erhält und die Rohrleitung 2 gegen Verrutschen gesichert ist. Der Verlegeabstand zwischen den einzelnen Halteschienen 3 liegt im Allgemeinen zwischen 0,5 und 1,5 m. Bei Bedarf sind andere Abstände wählbar.

Die Halteschienen 3 sind beabstandet zum Umlenkungsbereich 5 der Rohrleitung 2 angeordnet, so dass der minimale Biegeradius der Rohre ohne Rohrführungsbogen eingehalten wird. Die Doppelmäanderform der Verlegung der Rohrleitung 2, die hier vorliegt, eignet sich insbesondere für die deckennahe Einbringung eines vorgefertigten Temperierungsmoduls 1. Hierfür ist alternativ auch eine hier nicht gezeigte Schneckenmäanderform möglich. Die Clipvorrichtungen 4 zur Halterung der Rohrleitung 2 gewährleisten einen festen Verlegeabstand.

Im Umlenkungsbereich 5 können hier nicht dargestellte Querschienen vorgesehen sein, die senkrecht zu den Halteschienen 3 verlaufen und zur Fixierung der sich bei der Umlenkung bildenden Schlaufen der Rohrleitung 2 dienen.

Fig. 2 zeigt ein vorgefertigtes Temperierungsmodul 6 mit einer in Einfachmäanderform angeordneten Rohrleitung 7. Die Rohrleitung 7 besteht aus vernetztem Polyethylen-Kunststoffrohr. Daneben umfasst das Temperierungsmodul 6 zwei Halteschienen 8, die aus Kunststoff bestehen. Die Halteschienen 8 verfügen über Clipvorrichtungen 9, die zur kraftschlüssigen Halterung der Rohrleitung 7 dienen. Die Pfeile geben wiederum die Flussrichtung des die Rohrleitung 7 durchströmenden, der Kühlung beziehungsweise Heizung dienenden Mediums an.

Die Halteschienen 8 sind in einem gewissen Abstand vom Umlenkungsbereich 10 der Rohrleitung 7 angeordnet, so dass der minimale Biegeradius der Rohrleitung 7 gewährleistet wird, ohne dass ein Rohrführungsbogen erforderlich ist.

Fig. 3 zeigt ein Teilstück 11 einer Halteschiene eines erfindungsgemäßen Temperierungsmoduls mit einer nach oben geöffneten Clipvorrichtung 12. Das Teilstück 11 der Halteschiene besteht aus Kunststoff, wobei die Clipvorrichtung 12 der Halterung der Rohrleitung des Temperierungsmoduls dient. Daneben sind Öffnungen 13 zu sehen, die bei der Verwendung der Halteschienen in einem Bauelement das Vergießen mit Beton erleichtern. Das Teilstück 11 weist ein Verbindungselement 11 a zur Verbindung mit einer weiteren Schiene auf. Die anzukoppelnde Schiene, die hier nicht gezeigt ist, verfügt über Aufnahmevorrichtungen, in die das Verbindungselement 11 a eingreift und gegebenenfalls einrastet. Eine zweckmäßige Länge der Halteschienen liegt zwischen 30 cm und 1 m. Je nach Anwendung sind andere Längen möglich.

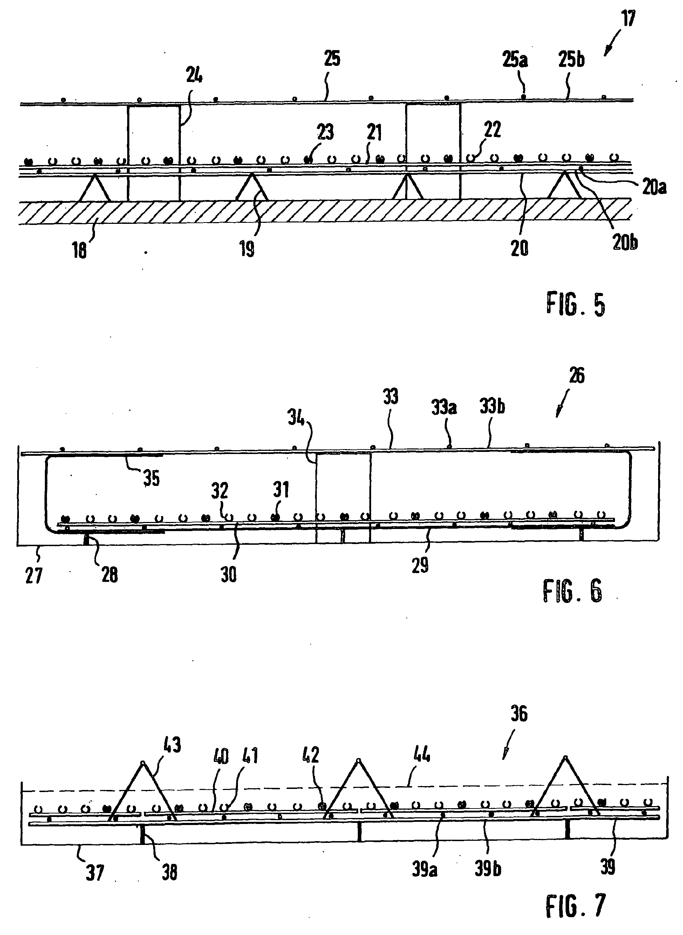

Fig. 4 zeigt ein Teilstück 14 einer Halteschiene eines erfindungsgemäßen Temperierungsmoduls mit einer umschließenden Clipvorrichtung 15. Die Clipvorrichtung 15 ragt aus dem Schienenkörper 16 heraus und nimmt bei der Verwendung in einem vorgefertigten Temperierungsmodul die Rohrleitung vollständig umschließend auf. Hierdurch kann eine besonders sichere Halterung der Rohrleitung insbesondere bei starken Beanspruchungen gewährleistet werden. Ein Herausspringen der Rohrleitung aus der Clipvorrichtung 15 ist praktisch ausgeschlossen.

In Fig. 5 ist ein Schnitt durch eine nach einem erfindungsgemäßen Verfahren hergestellte Ortbetondecke 17 dargestellt. Über der Schalung 18 sind Abstandshalter 19 angeordnet, auf denen die untere Bewehrung 20, die aus einer Längsbewehrung 20a und einer Querbewehrung 20b besteht, aufliegt. Über der statisch notwendigen unteren Bewehrung 20 ist das Temperierungsmodul umfassend die Halteschiene 21, die aus Kunststoff besteht, angeordnet. Alternativ ist es möglich, auf der unteren Bewehrung 20 zunächst Abstandselemente anzuordnen, auf die dann das Temperierungsmodul aufgelegt wird. So ist eine flexible Höhenanpassung der Lage des Temperierungsmoduls möglich. Auch ein Abhängen des Moduls von der oberen Bewehrung nach Verlegen derselben ist möglich. Die Halteschiene 21 verfügt über Clipvorrichtungen 22, die nach oben geöffnet sind. In einigen der Clipvorrichtungen 22 ist eine Rohrleitung 23 aufgenommen, durch die die zur Raumtemperierung dienende Flüssigkeit fließt. Die Rohrleitung 23 besteht aus vernetztem Polyethylen. Auf der Schalung sind weiterhin Abstandshalter 24 zur Auflage der statisch erforderlichen oberen Bewehrung 25 vorgesehen. Auch die obere Bewehrung wird wiederum von einer Querbewehrung 25b und einer Längsbewehrung 25a gebildet. Die Abstandshalter 24 sind übliche, im Handel erhältliche Elemente.

Hier nicht zu erkennen ist die Fixierung des Temperierungsmoduls aus Halteschiene 21 und Rohrleitung 23 an der unteren Bewehrung 20, wodurch ein Aufschwimmen beim Verguss des Elements mit Beton verhindert wird.

Mit dem erfindungsgemäßen Verfahren zur Herstellung einer Ortbetonecke unter Verwendung eines vorgefertigten Temperierungsmoduls mit einer Halteschiene 21 aus Kunststoff und einer aus Kunststoff bestehenden Rohrleitung 23 ist es möglich, die Materialkosten abzusenken und die Fertigungszeit zu verkürzen. Das Temperierungsmodul aus Kunststoff ist zudem deutlich leichter als ein unter Verwendung einer Stabstahlträgermatte hergestelltes Modul, wodurch die Montage erleichtert wird. Gleichzeitig ist ein Verlegeabstand durch die Halterung der Rohrleitung 23 an den Clipvorrichtungen 22 der Halteschiene 21 gesichert.

Fig. 6 zeigt einen Schnitt durch ein nach einem erfindungsgemäßen Verfahren hergestelltes Betonvollfertigteil 26. Die Herstellung des Betonvollfertigteils 26 erfolgt mit Hilfe einer Fertigungspalette 27, auf der Abstandshalter 28 für die untere Bewehrung 29 angeordnet sind. Über der unteren Bewehrung 29 ist die Halteschiene 30 angeordnet, die zusammen mit der Rohrleitung 31 ein vorgefertigtes Temperierungsmodul bildet.

Alternativ können zwischen der unteren Bewehrung 29 und dem Temperierungsmodul Abstandselemente zur flexiblen Höhenanpassung vorgesehen sein. Das Temperierungsmodul kann auch von der oberen Bewehrung nach Verlegen derselben abgehängt werden. Die Halteschiene 30 verfügt über Clipvorrichtungen 32, in denen die Rohrleitung 31 aufgenommen ist. Zur Halterung der statisch erforderlichen oberen Bewehrung 33, die aus einer Längsbewehrung 33a und einer Querbewehrung 33b besteht, dienen Abstandshalter 34 für die obere Bewehrung 33.

Entlang der Außenkante des Betonvollfertigteils 26 ist weiterhin eine Bügelbewehrung 35 vorgesehen, die als konstruktives Element zur Halterung der oberen Bewehrung dient. Das gesamte Betonvollfertigteil 26 wird abschließend mit Beton vergossen. Durch die Verwendung der Halteschiene 30 in dem Betonvollfertigteil 26 wird eine keinen statischen Nutzen aufweisende Baustahlträgermatte, wie sie bisher in Temperierungsmodulen verwendet wurde, überflüssig. Die statisch erforderliche untere Bewehrung 29 sowie die obere Bewehrung 33 können im Betonwerk mittels Stabstahl oder Bewehrungsmatten hergestellt werden.

In der Fig. 7 ist ein Schnitt durch ein nach einem erfindungsgemäßen Verfahren hergestelltes Betonhalbfertigteil 36 dargestellt. Die Fertigung des Betonhalbfertigteils 36 erfolgt mittels einer Fertigungspalette 37 für Betonhalbfertigteile. Auf der Unterseite der Fertigungspalette 37 stehen Abstandshalter 38 zur Beabstandung der unteren Bewehrung 39 auf. Die untere Bewehrung 39 setzt sich aus einer Längsbewehrung 39a und einer Querbewehrung 39b zusammen. Oberhalb der Längsbewehrung 39a ist eine Halteschiene 40 angeordnet, deren nach oben geöffnete Clipvorrichtungen 41 teilweise Rohrleitungen 42 aufnehmen, die zur Raumtemperierung dienen. Die Halteschiene 40 besteht aus mehreren Teilstücken. Auf der Bewehrung 39b stehen darüber hinaus Gitterträger 43 auf, die zur Auflage einer oberen Bewehrung dienen, nachdem das Betonhalbfertigteil 36 auf die Baustelle transportiert und dort montiert worden ist.

Darüber hinaus ist die Vergusskante 44 zu sehen, bis zu welcher im Betonwerk der teilweise Verguss des Betonhalbfertigteils 36 erfolgt. Erst auf der Baustelle wird abschließend der noch offene obere Bereich mit Beton vergossen.

Somit können Verfahren, die zur Herstellung von Bauelementen auf das vorgefertigte Temperierungsmodul der Erfindung zurückgreifen, sowohl zur Fertigung von Ortbetonecken und Betonvollfertigteilen als auch zur Fertigung von Betonhalbfertigteilen dienen. Durch die Verwendung von Kunststoffschienen sind diese Bauelemente und die zugrundeliegenden Temperierungsmodule günstiger herzustellen und weisen ein verringertes Gewicht auf. Gleichzeitig werden die Rohrleitungen sicher und mit einem definierten Abstand gehaltert.

### Bezugszeichen:

- 1: Temperierungsmodul
- 2: Rohrleitung
- 3: Halteschiene
- 4: Clipvorrichtung
- 5: Umlenkungsbereich
- 6: Temperierungsmodul
- 7: Rohrleitung
- 8: Halteschiene
- 9: Clipvorrichtung
- 10: Umlenkungsbereich
- 11: Teilstück
- 11a: Verbindungselement
- 12: Clipvorrichtung
- 13: Öffnung
- 14: Teilstück
- 15: Clipvorrichtung
- 16: Schienenkörper
- 17: Ortbetondecke
- 18: Schalung
- 19: Abstandshalter
- 20: Bewehrung
- 20a: Längsbewehrung
- 20b: Querbewehrung
- 21: Halteschiene
- 22: Clipvorrichtung
- 23: Rohrleitung
- 24: Abstandshalter
- 25: Bewehrung
- 25a: Längsbewehrung
- 25b: Querbewehrung
- 26: Betonvollfertigteil
- 27: Fertigungspalette
- 28: Abstandshalter
- 29: Bewehrung
- 30: Halteschiene
- 31: Rohrleitung
- 32: Clipvorrichtung
- 33: Bewehrung
- 33a: Längsbewehrung
- 33b: Querbewehrung
- 34: Abstandshalter
- 35: Bügelbewehrung
- 36: Betonhalbfertigteil
- 37: Fertigungspalette
- 38: Abstandshalter
- 39: Bewehrung
- 39a: Längsbewehrung
- 39b: Querbewehrung
- 40: Halteschiene
- 41: Clipvorrichtung
- 42: Rohrleitung
- 43: Gitterträger
- 44: Vergusskante

## Patentansprüche

1. Vorgefertigtes Temperierungsmodul für die Verwendung in einem Bauelement, insbesondere einem Decken- oder Wandelement, mit wenigstens einer Rohrleitung, **dadurch gekennzeichnet, dass** das Temperierungsmodul (1, 6) eine oder mehrere Halteschienen (3, 8, 21, 30, 40), aufweist, an denen die Rohrleitung (2, 7, 23, 31, 42) gehaltert ist.

2. Temperierungsmodul nach Anspruch 1, **dadurch gekennzeichnet, dass** die Halteschiene (3, 8, 21, 30, 40) aus Kunststoff besteht.

3. Temperierungsmodul nach einem der vorangehenden Ansprüche, **dadurch gekennzeichnet, dass** die Rohrleitung (2, 7, 23, 31, 42) kraftschlüssig an der Halteschiene gehaltert ist.

4. Temperierungsmodul nach einem der vorangehenden Ansprüche, **dadurch gekennzeichnet, dass** die Halteschiene (3, 8, 21, 30, 40) wenigstens eine nach oben geöffnete Clipvorrichtung (4, 9, 12, 22, 32, 41) aufweist, an der die Rohrleitung (2, 7, 23, 31, 42) gehaltert ist.

5. Temperierungsmodul nach einem der vorangehenden Ansprüche, **dadurch gekennzeichnet, dass** die Halteschiene (3, 8) wenigstens eine die gehalterte Rohrleitung (2, 7) umschließende Clipvorrichtung (15) aufweist.

6. Temperierungsmodul nach einem der vorangehenden Ansprüche, **dadurch gekennzeichnet, dass** die Halteschiene (3, 8, 21, 30, 40) bei gegebenenfalls vorhandenen Umlenkungen der Rohrleitung (2, 7, 23, 31, 42) beabstandet zum Umlenkungsbereich (5, 10) angeordnet ist.

7. Temperierungsmodul nach einem der vorangehenden Ansprüche, **dadurch gekennzeichnet, dass** die Rohrleitung (2, 7, 23, 31, 42) aus Kunststoff, insbesondere aus vernetztem Polyethylen, besteht.

8. Temperierungsmodul nach einem der vorangehenden Ansprüche, **dadurch gekennzeichnet, dass** die Rohrleitung (2, 7, 23, 31, 42) in dem Temperierungsmodul (1, 6) in einer Doppelmäanderform oder einer Schneckenmäanderform oder einer Einfachmäanderform angeordnet ist.

9. Verfahren zur Herstellung eines Bauelements, insbesondere eines Decken- oder Wandelements, unter Verwendung eines Temperierungsmoduls (1,6) nach einem der vorangehenden Ansprüche, umfassend die folgenden Schritte:
- Fertigung des Temperierungsmoduls (1,6),
- Erstellen einer statisch erforderlichen Bewehrung (29),
- Einbringen des Temperierungsmoduls (1,6) und Halterung desselben an der Bewehrung (29) und
- Einbringen konstruktiver Elemente (28) zur Halterung einer oberen Bewehrung (33).

10. Verfahren nach Anspruch 9, **dadurch gekennzeichnet, dass** nach dem Erstellen der statisch erforderlichen Bewehrung (29) auf dieser Bewehrung wenigstens ein Abstandselement (28) angeordnet wird, auf dem das Temperierungsmodul (1,6) eingebracht wird.

11. Verfahren nach Anspruch 9 oder 10, umfassend weiterhin die folgenden Schritte:
- Einbringen einer oberen Bewehrung (33) und
- Verguss des Bauelements (26) mit Beton.

12. Verfahren nach einem der Ansprüche 9 bis 11, **dadurch gekennzeichnet, dass** als konstruktive Elemente Abstandshalter (28) verwendet werden.

13. Verfahren nach einem der Ansprüche 9 bis 12, **dadurch gekennzeichnet, dass** als konstruktive Elemente Bügelbewehrungen (35) entlang einer Außenkante des Bauelements (26) verwendet werden.

14. Verfahren nach Anspruch 9, umfassend weiterhin die folgenden Schritte:
- teilweiser gesamtflächiger Verguss des Bauelements (36) mit Beton,
- Einbringen einer oberen Bewehrung (33) und
- Verguss des Bauelements mit Beton.

15. Verfahren nach Anspruch 14, **dadurch gekennzeichnet, dass** als konstruktive Elemente (28) in das Bauelement (36) integrierte Gitterträger (43) verwendet werden.
